# EUROPÄISCHE PATENTSCHRIFT

(11) **EP 0 343 395 B1**
(45) Veröffentlichungstag und Bekanntmachung des Hinweises auf die Patenterteilung: **05.06.1996**
(21) Anmeldenummer: 89107594.7
(22) Anmeldetag: 27.04.1989
(51) Int. Cl.: F16L 13/14

(54) **Pressverbindungsanordnung, Armatur und Verfahren zur Herstellung**
Pressfitting, tap and method of manufacture
Raccord serré, robinetterie et mèthode de manufacture

(30) Priorität: 25.05.1988 CH 1976/88; 26.01.1989 CH 248/89
(43) Veröffentlichungstag der Anmeldung: 29.11.1989
(73) Patentinhaber: R. Nussbaum AG, CH-4601 Olten (CH); Firma Franz Viegener II, D-57439 Attendorn (DE)
(72) Erfinder: Martin, Kurt, CH-4450 Sissach (CH); Viegener, Walter, D-5952 Attendorn (DE)
(74) Vertreter: Keller, René, Dr.

(56) Entgegenhaltungen:
- EP-A- 0 198 789
- DE-A- 1 650 193
- DE-A- 2 725 280
- DE-A- 2 729 393
- DE-B- 1 652 872
- DE-C- 556 114
- GB-A- 1 239 754

## Beschreibung

Die Erfindung betrifft eine Preßverbindungsanordnung gemäß Patentanspruch 1, einen Bausatz gemäß Patentanspruch 10, eine Armatur gemäß Patentanspruch 11, ein Verfahren zur Herstellung einer fluiddichten Preßverbindung gemäß Patentanspruch 15 und ein Verfahren zur Herstellung der Armatur gemäß Patentanspruch 17.

Der bzw. die Rohranschlußstutzen von Armaturen und Fittingen aus Metallguß wurden bisher zum Verbinden mit einem Rohr mit einem Innen- oder Außengewinde oder einem Innen- oder Außenlötende versehen. Bei der Installation, z. B. einer Brauchwasserinstallation in Wohnhäusern, wurden die Rohre und Armaturen durch Fittinge miteinander verschraubt, wobei das Gewinde mit Hanf und Fett abgedichtet werden mußte, oder verlötet wurde, wobei eine fachmännische Reinigung und Erwärmung der zu verbindenden Teile notwendig war. Die Montage war zeitaufwendig und konnte, wenn sie nicht fachmännisch ausgeführt wurde, zu Undichtigkeiten führen.

Zur Verbindung dünnwandiger Stahlrohre hat man schon sogenannte Preßfittinge aus hochlegiertem, korrosionsbeständigem, nichtrostendem Stahl verwendet (DE-PS-1,187,870), wobei zum kathodischen Korrosionsschutz zusätzlich ein mit den Rohrenden und dem Fitting in elektrisch leitendem Kontakt stehender Kupferring in der Rohrverbindung angeordnet wurde (EP-B-0,198,789 - Firmenschrift Mannesmann Edelstahlrohr, "Mannesmann-Preßfitting-System aus nichtrostenden Stählen", Ausgabe März 1985). Diese Preßfittinge werden durch plastische Formgebung hergestellt und haben sickenförmige Enden, die je einen Dichtring aufnehmen. Die Enden der zu verbindenden Stahlrohre werden in den Preßfitting geschoben und ein unmittelbar vor der am Fittingende liegenden Sicke sich befindender Fittingteil mit Hilfe eines speziellen elektromechanischen Preßwerkzeugs, in dessen Zylinder eine der Nennweite angepaßte Preßbacke gesteckt wird, mit einer Preßkraft von 100 kN verpreßt, wobei Fitting und Rohr in diesem Bereich annähernd zu einem Sechskant verformt werden.

In der DE-A 16 50 193 wird eine fluiddichte Verbindung zwischen einem Rohrendbereich mit auf der Rohroberfläche herausgearbeiteter ringförmiger scharfkantiger Struktur, in welche das weiche Material eines Flansches mit einem keilartig über den Außenmantel des Flansches gepreßten Spannring während des Preßvorgangs eingeflossen ist, beschrieben. Der Flansch wird mittels eines Gesenks derart gegen das strukturierte Rohr gepreßt, daß das Flanschmaterial dichtend die Oberflächenstrukturen des Rohrendbereichs umfließt.

Die aus der DE-A 16 50 193 bekannte Verbindung kann in der Sanitärinstallationstechnik aufgrund der hohen Drücke und des aufwendigen Preßapparates, der nicht von einem Monteur zu einer beliebigen Verbindungsstelle tragbar ist, nicht verwendet werden. Die aus der DE-PS-1,187,870 und der EP-B-0,198,789 bekannten Preßfittinge können in der Sanitärinstallationstechnik nur zum Verbinden der Leitungsrohre verwendet werden. Für die Verbindung der Rohrendbereiche mit den Armaturen sind die bekannten Preßfittinge nicht anwendbar. Diese erfolgt bisher immer noch in der eingangs genannten Art. Der Sanitärinstallateur muß deshalb sowohl das für die Verbindung der Rohre mit den Armaturen in der herkömmlichen Weise als auch das für die Verbindung der Rohre mittels Preßfittingen erforderliche Material und die entsprechenden Werkzeuge mitführen. Die unterschiedlichen Verbindungstechniken komplizieren die Installationsarbeit zusätzlich und die eingangs genannten Probleme bleiben bestehen.

Der Erfindung liegt die Aufgabe zugrunde, eine einfach und rasch herzustellende, zuverlässig dichte und mechanisch feste Verbindung der eingangs genannten Art zu schaffen, bei der Armaturen und Fittinge aus Metallguß sowie Kunststoffrohre verwendbar sind.

Die erfindungsgemäße Lösung der Aufgabe ist hinsichtlich der Preß -Verbindungsanordnung durch die in Patentanspruch 1, hinsichtlich des Bausatzes durch die in Patentanspruch 10, hinsichtlich der Armatur durch die in Anspruch 11, hinsichtlich der Herstellung der Verbindung durch die in den Patentanspruch 15, sowie hinsichtlich des Verfahrens zur Herstellung der Armatur durch die in Anspruch 17 angegebenen Merkmale gekennzeichnet.

Im folgenden werden Ausführungsbeispiele der Erfindung anhand der Zeichnungen näher erläutert. Es zeigen:
Fig. 1 einen Längsschnitt durch einen Ausschnitt einer Armatur mit Anschlußstutzen, in dem ein Rohr steckt, im nicht gepreßten Zustand,
Fig. 2 einen vergrößerten Ausschnitt des Anschlußstutzens mit Rohr und einem Ausschnitt der Anpreßbacken einer Zange im gepreßten Zustand,
Fig. 3 einen vergrößerten Ausschnitt eines Schnitts durch den Anschlußstutzen entlang der Linie III - III in Fig. 2 im gepreßten Zustand,
Fig. 4 einen Längsschnitt durch eine Verbindung mit einer Stützhülse, und
Fig. 5 einen Längsschnitt durch eine Variante der Verbindung nach Fig. 4.

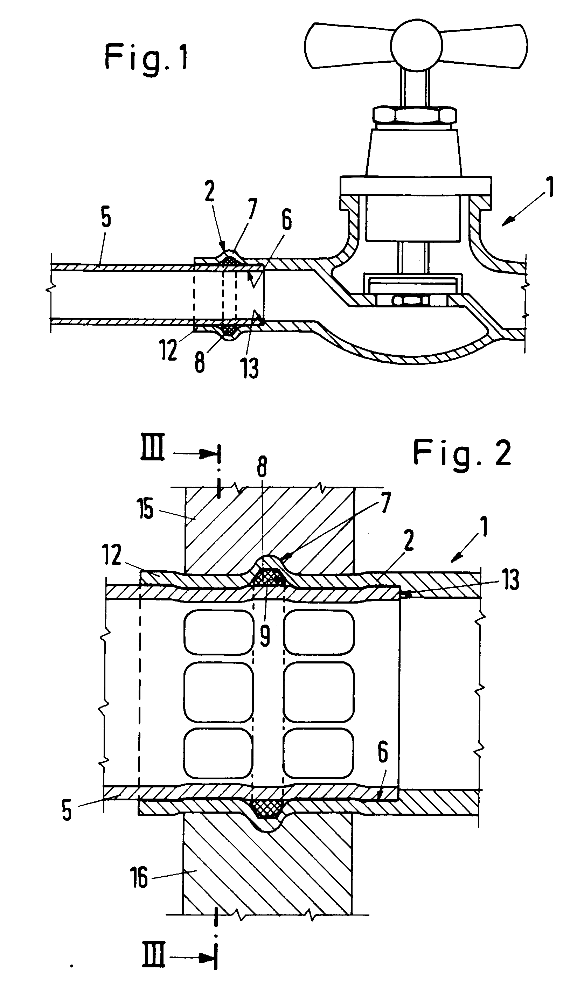

Bei der in Fig. 1 dargestellten (noch nicht verpreßten) Verbindung einer Armatur 1 (Niederschraubventil) befindet sich in dessen Anschlußstutzen 2 ein Rohr 5. Rohr 5 und Anschlußstutzen 2 werden durch einen unten beschriebenen Preßvorgang dicht und mechanisch fest verpreßt.

Die Armatur 1 und der Stutzen 2 bestehen aus Rotguß. Die Quetschgrenze und der Elastizitätsmodul des stutzens aus Rotguß sind kleiner als beim Rohr 5, welches aus nichtrostendem Stahl besteht. (Es kann auch ein Stutzenmaterial verwendet werden, dessen Quetschgrenze gleich derjenigen des Rohrs 5 ist). Unter Quetschgrenze versteht man die in einem Druckversuch feststellbare Fließgrenze einer Probe des Materials. Sie ist definiert durch den Quotient einer Druckkraft F_{F}, bei der der Anstieg einer Kraftlängenänderungskurve unter Auftreten einer merklichen, bleibenden Stauchung eine erste Unstetigkeit zeigt, und dem Anfangsquerschnitt A₀ der Probe. (Bei Fehlen oder nicht Bestimmbarkeit der Unstetigkeit tritt an ihre Stelle der Quotient aus einer Kraft F_{0,2}, die eine bleibende Stauchung von 0,2% ergibt und dem Anfangsquerschnitt A₀ der Probe.) Die Elastizität ist die Fähigkeit eines Körpers, hier des Stutzens 2, die durch eine Preßkraft des unten beschriebenen Preßvorgangs verursachte Form- und/oder Volumenänderung bis auf eine bleibende plastische Verformung rückgängig zu machen.

Die Rotgußlegierung ist ein Rotguß 2 nach DIN 1705 mit 2 % Sn, 8 % Zn und 5 % Pb, dem Nickel zugesetzt ist, so daß der Nickelgehalt 2,2 bis 3,0 % beträgt; der Rest der Legierung ist Kupfer. Der Nickelzusatz erhöht die Bruchdehnung und gewährleistet die plastische Verformung ohne Rißbildung für das weiter unten beschriebene Aufpressen. Ein Nickelgehalt über 3 % ergibt ein zu sprödes Material. Durch den hohen Bleigehalt wird eine gute spanende Bearbeitung ermöglicht.

Zur Erreichung einer hohen Plastizität und Bruchdehnung wird die Armatur 1 nach dem Gießen bei einer Temperatur von zweihundert bis fünfhundert Grad Celsius während einer Stunde geglüht.

Die Wandstärke des Stutzens 2 ist so dimensioniert, vorzugsweise zwischen ein und zwei Millimetern, daß der Stutzen 2 auf das seinem Innendurchmesser angepaßte Rohr 5 mit Hilfe einer Zange dicht aufpreßbar ist und einer Rückbildung des Rohrs aufgrund dessen Elastizität nach der Entlastung des unten beschriebenen Preßvorgangs durch die Zange standhält. Die Elastizität des Rohres drückt bei Entlastung nach dem Preßvorgang das Rohr dichtend, sowie dreh-, zug- und druckfest gegen den Stutzen an.

Damit die Innenseite 6 des Stutzen 2 gut auf der äußeren Oberfläche des Rohres 5 im angepreßten Zustand anliegt, ist sie glatt ausgedreht. Die Drehriefen sind gerade noch mit dem bloßen Auge erkennbar. Beim unten beschriebenen Preßvorgang werden die Drehriefen abgeplattet und tragen damit zur Abdichtung bei.

An der Außenseite hat der Stutzen 2 eine Ringwulst 7 und an der Innenseite 6 eine in diese hineinragende Ringnut 9. Die Ringnut 9 ist ebenfalls ausgedreht. Auch im Bereich des Wulstes 7 und der Ringnut 9 ist die Wandstärke annähernd gleich zum restlichen Stutzen 2 ausgebildet. In die Ringnut 9 ist ein Dichtring 8 eingelegt. Der Durchmesser des Dichtrings 8 ist so bemessen, daß er im eingelegten Zustand nicht oder nur geringfügig über die Innenseite 6 hervorsteht, das Rohr 5 sich aber in den Stutzen 2 einführen läßt, ohne den Dichtring 8 zu verletzen. Vor dem Einführen wird das Rohr 5 entgratet, und wenn nötig angefast.

Die Ringwulst 7 hat einen Abstand vom freien Ende des Stutzens 2, wobei dieser Abstand derart bemessen ist, daß der die Ringwulst 7 überragende Endteil 12 des Stutzens 2 mindestens die Breite einer unten beschriebenen Backe 15 bzw. 16 der Zange hat und mit Hilfe dieser Zange auf das Rohr 5 aufpreßbar ist.

Bis zu annähernd zwei Dritteln des Rohrdurchmessers vom freien Ende des Stutzens 2 entfernt, ist die Innenseite 6 um annähernd die Dicke des Rohres 5 ausgedreht, und geht dann über eine Ringstufe 13 in den unbearbeiteten Teil über. Die Stufenhöhe ist der Rohrwandstärke angepaßt, um Wirbel der durchströmenden Flüssigkeit weitgehend zu vermeiden. Durch das Ausdrehen wird einerseits die rauhe Gußhaut entfernt, die beim späteren Andrücken stören würde, und andererseits tragen die gerade noch sichtbaren Drehrillen beim späteren Anpressen zum Abdichten bei. Gegenüber den oben beschriebenen üblichen Anschlußstutzen mit Gewinde sind die erfindungsgemäßen mit einer dünneren Wandstärke im Bereich des Stutzens versehen. Die Wandstärke kann beim Guß bereits dünner ausgeführt werden, da kein Gewinde erforderlich ist. Durch das Ausdrehen wird die Wandstärke weiter verringert, sodaß sich nun der Stutzen 2 bei der späteren Montage einwandfrei ohne Risse mit einer Zange andrücken läßt.

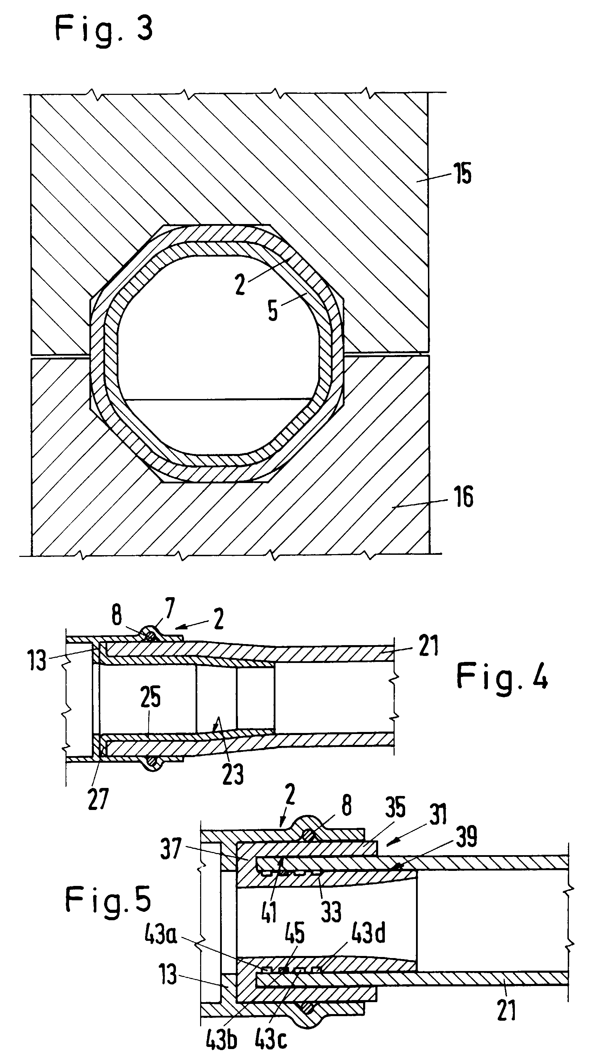

Die Zange hat eine obere Backe 15 und eine untere 16. Beide Backen 15 und 16 haben an ihren Andruckflächen eine um den Wulst 7 greifende Aussparung. Diese ist derart ausgebildet, daß sie beim Zusammendrücken zuerst auf die Wulstoberkante drückt und anschließend auf den Wulstrand und die einige Millimeter vom Wulst 7 entfernten Zylinderoberflächen des Stutzens 2. Beim Anpressen wird der Dichtring 8 in der in Fig. 2 gezeigten Weise gegen die Oberfläche des Rohres 5 gedrückt, und die Länge des Stutzens geringfügig verlängert. Wie in Fig. 3 ersichtlich, bilden die Backen 15 und 16 beidseits des Wulstes 7 im geschlossenen Zustand, wie in Fig. 3 ersichtlich, ein Sechseck. Beim Anpressen wird der Stutzen 2 an je sechs Stellen beidseits des Wulstes 7 eingedrückt; der Wulst 7 wird als Ganzes verformt. Durch dieses Eindrücken wird der Stutzen 2 dichtend gegen das Rohr 5 gepreßt, wobei die Eindruckstellen beide Teile dreh-, druck- und zugfest miteinander verbinden. Da auf beiden Seiten des Wulstes 7 verformt wird, kann die Eindrucktiefe zur Erreichung der erforderlichen Dreh-, Druck- und Zugfestigkeit im Bereich plastischer Verformung des Stutzens 2 so dimensioniert werden, daß keine Risse im Rotguß auftreten.

Sollen mehrere Armaturen ummittelbar Stutzen an Stutzen miteinander verbunden werden, so steckt man ein kurzes Verbindungsrohrstück vom einen Stutzen zum anderen. Beide Stutzen werden nacheinander mit der Zange dichtend auf das Rohrstück gedrückt. Das Verbindungsrohrstück ist von außen nicht zu sehen.

Die Armaturen können auch derart ausgebildet sein, daß jeweils die Einlaßstutzen als Stutzen mit Wulst 7 und Nut 9 mit eingelegtem Dichtring 8 und die Auslaßstutzen als Rohrstutzen ausgebildet sind, wobei der Außendurchmesser des Auslaßstutzens dem Innendurchmesser des Einlaßstutzen angepaßt ist. Derartige Armaturen lassen sich ohne Zwischenstücke direkt ineinanderstecken und können mit der Zange dichtend festgeklemmt werden. Rohre können direkt an die Einlaßstutzen angeschlossen werden, wohingegen Rohre an den Auslaßstutzen mit einem Verbindungsfitting mit je einem Wulst mit Dichtring an seinen Enden durch Anpressen mittels Zange verbunden werden. Die Einlaßstutzen können auch als Rohrstutzen und die Auslaßstutzen als über die Einlaßstutzen schiebbare Stutzen mit Wulst und Dichtring ausgebildet werden.

Müssen mehrere Rohrstücke durch gerade oder gebogene Fittinge oder Abzweiger (T-Stücke) miteinander verbunden werden, können die Anschlußstutzen der Fittinge analog zu denen der Armaturen ausgeführt werden. Die Ringstufe 13 ist bei einem als Muffe ausgebildeten Fitting in dessen Mitte als Ringsteg ausgeführt, wobei die Ausfräsung von beiden Enden ausgehend vorgenommen wird.

Die gegenüber dem Rohr 5 kleinere Quetschgrenze des Stutzens 2, sowie der kleinere Elastizitätsmodul des Stutzens 2 gegenüber dem Rohr 5 lassen auch ohne Dichtring 8 eine dichte Verbindung zwischen Stutzen 2 und Rohr 5 entstehen, da der Stutzen 2 stärker als das Rohr 5 plastisch verformt wird. Gegen diesen plastisch verformten Stutzen 2 drückt das elastische Rohr 5. Mit dem Dichtring 8 läßt sich eine Langzeitdichtwirkung über viele Jahrzehnte, namentlich bei hohen Leitungsdrücken, sicherstellen. Durch Dilatation hervorgerufene Bewegungen und Kräfte werden durch die Preßstellen beidseits des Wulstes 7 vom Dichtring 8 und hierdurch jegliche abnützenden Bewegungen auf ihn ferngehalten. Die Verpreßung ist dicht; ihre Langzeitdichtigkeit wird lediglich durch den Dichtring 8 erhöht. Werden nicht allzu hohe Anforderungen an die Dichtigkeit der Verbindung gestellt, kann auch nur mit einer Abdichtung durch den Dichtring 8 gearbeitet werden, wobei dann die Verpreßung nur so stark ausgeführt werden muß, daß der Dichtring 8 ausreichend angepreßt und Stutzen 2 und Rohr 5 formschlüssig an beiden Seiten des Wulstes 7 gehalten sind, um, wie bereits ausgeführt, Bewegungen vom Dichtring fernzuhalten.

Probleme, wie sie sich früher durch die Verwendung von Innen- und Außengewinden bzw. von Innen- und Außenlötenden und den hierzu passenden Übergangsstücken ergaben, entfallen bei der neuen Ausführungsart.

Mit den erfindungsgemäßen Armaturen und Fittingen aus Metallguß, insbesondere aus Rotguß, lassen sich sämtliche Verbindungen zwischen den Leitungsrohren und den Armaturen in einer Hausinstallation einfach durch Aufpressen der Rohranschlußstutzen der Armatur bzw. des Fittings auf das Leitungsrohr 5 mit Hilfe einer Zange ausführen. Die Erfindung nutzt dabei die überraschende Erkenntnis, daß sich der aus Metallguß, vorzugsweise einer geglühten Rotgußlegierung mit einem 2,2- bis 3-prozentigen Nickelgehalt, bestehende Anschlußstutzen, wenn man seine Wandstärke entsprechend dünn bemißt und ihn auf ein seinem Innendurchmesser angepaßtes Rohr 5 schiebt, in einem für eine mechanisch gesicherte und flüssigkeitsdichte Verbindung gerade noch ausreichendes Maß plastisch verformen läßt, ohne daß es zu einer Rißbildung kommt. Das ist deshalb überraschend, weil Metallguß, insbesondere Rotguß spröde ist und die Fachwelt demgemäß bisher der Ansicht war, er lasse sich nicht, jedenfalls nicht ohne Rißbildung verformen. Die erfindungsgemäße Armatur bzw. der Fitting läßt sich in der üblichen, einfachen Gießtechnik herstellen. Das aufwendige Verformen (Drücken) der bisherigen Preßfittinge aus hochlegiertem Stahl entfällt und die Gießtechnik ermöglicht die Herstellung spezieller Formen, die durch plastisches Verformen von Stahl praktisch nicht herstellbar sind. Die Erfindung ermöglicht es ferner, zwei Armaturen miteinander zu verbinden, indem der Anschlußstutzen der einen Armatur über einen dessen Innendurchmesser angepaßtes Anschlußrohrstück der anderen Armatur geschoben und mit diesem verpreßt wird.

Da beideseits des Wulstes 7 mit dem Preßwerkzeug gedrückt wird, kann die Tiefe der plastischen Verformung gering gehalten werden, wobei durch die Verpressung eine dichte Metallverbindung erzielt werden kann und der Dichtring dann nur als zusätzliche Sicherung für die Dichtigkeit bei hohen Druckstößen, Leitungsdrücken und Erschütterungen dient.

Anstelle des Stahlrohrs 5 kann auch ein Rohr 21 aus Kunststoff, Kupfer oder einem anderen Material verwendet werden, dessen Quetschgrenze und Elastizitätsmodul kleiner ist als derjenige des Stutzens 2. In dieses Rohr 21 wird, wie in Fig. 4 im unverpreßten Zustand dargestellt, eine Stützhülse 23 z. B. eingedrückt. Die Quetschgrenze und der Elastizitätsmodul der Stützhülse 23 sind größer als die-bzw. derjenige des Rohrs 21 und größer als die- bzw. derjenige des Stutzens 2. Das Material der Stützhülse 23 richtet sich nach dem durch das Rohr 21 fließende Fluid und den Anforderungen betreffend Quetschgrenze, Elastizitätsmodul und Verarbeitbarkeit; es wird bevorzugt Stahl mit und ohne Oberflächenvergütung, eine Bronze oder auch verstärkte Kunststoffe verwendet. Die Stützhülse 23 hat ein zylindrisches Hülsenrohr 25, welches sich zum einen Ende hin verjüngt und am anderen Ende einen Flansch 27 hat. Die Verjüngung ist so ausgebildet, daß die Stützhülse 23 bis zu etwa zwanzig Prozent ihrer Lange in das Rohr 21 steckbar und durch verstärkten Druck unten Aufweitung des Rohrs 21 in dieses bis zum Flansch 27 hineinschiebbar ist. Hierdurch sitzt die Stützhülse fest im Rohr 21. Die Wandstärke des Hülsenrohres 25 nimmt zu dessen freien Ende hin ab, um im eingebauten Zustand dem strömenden Wasser einen geringeren Widerstand entgegenzusetzen. Zur Montage wird das Rohr 21 in den Stutzen 2 mit in den Ringwulst 7 eingelegten Dichtring 8 gesteckt und der Stutzen 2 mittels der beiden Backen 15 und 16 der Zange auf das Rohr 21 gegen die Stützhülse 23 gepreßt. Zum Formschluß zwischen Rohr 21 und Stützhülse 23 kann die dem Rohr 21 zugewandte Oberfläche des Hülsenrohres 25 Vertiefungen aufweisen. Die Elastizität der Stützhülse 23 drückt das Rohr 21 von innen her dichtend dreh-, zug- und druckfest nach erfolgter Verpressung gegen die Innenseite des Stutzen 2.

Aus fertigungstechnischen Überlegungen ist auf dem Stutzen 2 oftmals ein zweiter nicht dargestellter Wulst auf der zum Stutzenende abgewandten Seite des Ringwulstes 7 vorhanden. Dieser zweite Wulst kann auch als Sechskant ausgebildet sein. Beim Preßvorgang sollte dieser zweite Wulst mindestens einen Abstand von zwei bis drei Millimetern von dem ihm zugewandten äußeren Rand der Preßfläche der Preßbacken 15 und 16 haben. Bei einem kürzeren Abstand können während des Aufpressens auf der Außenseite des Stutzens kleine Materialrisse auftreten, die unschön aussehen, aber die Güte der Preßverbindung nicht nennenswert beeinträchtigen. Um eine einwandfreie Verpressung zu erreichen, sollte jegliche Wandverstärkung des Stutzens erst nach obigem Abstand beginnen.

Die Stützhülse 23 kann auch als Doppelhülse 31, wie in Fig. 5 im unverpreßten Zustand dargestellt, ausgebildet sein, bei der ein zylindrischer innerer Hülsenteil 33 innerhalb eines zylindrischen äußeren Hülsenteils 35 sitzt. Innerer und äußerer Hülsenteil 33 und 35 sind mit einen Steg 37 miteinander verbunden. Zur Montage wird die Doppelhülse 31 so auf das Rohr 21 geschoben, daß eine dem äußeren Hülsenteil 35 zugewandte Oberfläche 39 des inneren Hülsenteils 33 mit einer Spieltoleranz an der Innenwandung des Rohres 21 und eine dem inneren Hülsenteil 33 zugewandte Oberfläche 41 des äußeren Hülsenteils 35 am Rohrmantel des Rohres 21 mit einer Spieltoleranz anliegt.

Die Wandstärke der inneren Hülse 33 nimmt zu dem dem Steg 37 abgewandten Ende hin ab. Hierdurch erfolgt im eingebauten Zustand eine Reduzierung des Wasserwiderstands. Die Doppelhülse 31 hat vier zur Oberfläche 41 hin geöffnete, radiale, in annähernd gleichen Abstand von einander angeordnete Nuten 43a bis d. In die Nut 43b ist ein Dichtring 45 eingelegt. Während des Preßvorgangs wird der Stutzen 2 mit seinem Dichtring 8 mittels der Backen 15 und 16 der Zange gegen die äußere Oberfläche des äußeren Hülsenteils 35 gedrückt. Der äußere Hülsenteil 35 drückt die Rohrinnenfläche des Rohrs 21 in die Nuten 43a, 43c, 43d und gegen den Dichtring 45. Hierdurch ist das Rohr 21 formschlüssig und durch den gequetschten Dichtring 45 dicht mit der Doppelhülse 31 verbunden. Diese Rohrverbindung hat sich bei Rohren mit geringer Elastizität und kriechendem Rohrmaterial bewährt.

Anstelle radialer Nuten 43a bis d kann nur eine einzige Nut als Nut 43b zur Aufnahme des Dichtrings 45 ausgebildet sein, während die restliche Oberfläche 39 von mehreren Furchen derart durchzogen ist, daß Stege und Vertiefungen entstehen, die einen Formschluß mit der Rohrinnenwandung beim Verpressen ermöglichen.

Da bis jetzt Kupferrohre bei korrosionsgefährdeten Leitungen nach aufwendigem und sorgfältigem Reinigen nur durch den Fachmann verlötet werden konnten, bringt die oben ausgeführte Verbindung unter Zuhilfenahme der Stützhülse 23 eine wesentliche Arbeitserleichtung und eine raschere Herstellungsmöglichkeit der Verbindung. Auch können z. B. Kunststoffrohre oder andere Rohre mit geringer Elastizität unter Zuhilfenahme der Stützhülse 23 bzw. 31 einfach mit Stutzen oder Fittingen, ebenso wie Kupferrohre, verpreßt werden.

Statt den Stutzen 2 an sechs Stellen beidseits des Wulstes 7 einzudrücken kann auch mit weniger oder bevorzugt mit mehr als sechs Druckstellen gearbeitet werden. Die richtige Anzahl Druckstellen richtet sich nach den zu verpressenden Materialien und deren Wandstärken.

Der Stutzen 2 kann bei den in Fig. 4 und 5 dargestellten Ausführungsformen aus Stahl oder einem anderen Material, wie z. B. Kunststoff, bestehen.

## Patentansprüche

1. Preßverbindungsanordnung, bei der ein Anschlußstutzen **(2)** einer Armatur **(1)** oder eines Fittings aus Metallguß auf ein im Bereich der Preßverbindung keine herausgearbeiteten wesentlichen Wandstärkenänderungen aufweisendes, unbewehrtes oder mit einer Stützhülse versehenes Rohr **(5, 21)** aufgepreßt, die Quetschgrenze des Stutzens **(2)** höchstens gleich groß wie diejenige des Rohrs **(5)** bzw. der Stützhülse **(23, 31)** und der Elastizitätsmodul der Stützhülse größer als derjenige des die Stützhülse aufnehmenden Rohres **(21)** ist, so daß das Rohr **(5)** bzw. die Stützhülse **(23, 31)** in stärkerem Maße als der Stutzen **(2)** bestrebt ist, sich nach der Entlastung des beim Aufpressen wirkenden Preßdrucks zurückzubilden, um das Rohr an den plastisch verformten Stutzen anzupressen, wobei die Wandstärke des Stutzens **(2)** so dimensioniert ist, daß dieser der Rückbildung des Rohres **(5)** bzw. der Stützhülse **(23)** aufgrund dessen bzw. deren Elastizität nach der Entlastung standhält.

2. Anordnung nach Anspruch 1, **dadurch gekennzeichnet,** daß der Stutzen **(2)** und das Rohr **(5)** bzw. die Stützhülse **(21, 31)** aus verschiedenen Metallwerkstoffen bestehen und die Quetschgrenze und der Elastizitätsmodul des Stutzens **(2)** kleiner als die- bzw. derjenige des Rohrs **(5)** bzw. der Stützhülse **(23, 31)** ist.

3. Anordnung nach Anspruch 1 oder 2, **gekennzeichnet durch** Dichtmittel **(8)** zwischen der Innenwandung des Stutzens **(2)** und der Außenwandung des Rohrs **(5, 21)**.

4. Anordnung nach einem der Ansprüche 1 bis 3, **dadurch gekennzeichnet,** daß die Stützhülse **(31)** einen inneren, im Rohr **(21)** sitzenden Hülsenteil **(33)** und einen am Mantel des Rohrs **(21)** anliegenden äußeren Hülsenteil **(35)** hat, die beide mit dem Rohr **(21)** formschlüssig verpreßt sind, wobei der innere **(33)** mit dem äußeren **(35)** Hülsenteil durch einen Steg **(37)** um die Stirnseite des Rohrendes verbunden ist.

5. Anordnung nach Anspruch 4, **gekennzeichnet durch** Dichtmittel **(45, 8)** zwischen dem inneren Hülsenteil **(33)** und dem Rohr **(21)** und/oder dem äußeren Hülsenteil **(35)** und dem Stutzen **(2)**.

6. Anordnung nach einem der Ansprüche 1 bis 5, **dadurch gekennzeichnet,** daß die Wandung des Stutzens **(2)** und des Rohres **(5, 21)** derart plastisch verformt sind, daß ein Formschluß zwischen ihnen vorhanden ist.

7. Anordnung nach einem der Ansprüche 1 bis 6, **dadurch gekennzeichnet,** daß der Stutzen **(2)** an mehreren entlang des Umfangs voneinander distanzierten Stellen auf das Rohr **(5, 21)** gepreßt bzw. das Rohr **(5, 21)** mit der Stützhülse **(23, 31)** verpreßt ist.

8. Anordnung nach einem der Ansprüche 1 bis 7, **dadurch gekennzeichnet,** daß der Stutzen **(2)** an der Außenseite einen Ringwulst **(7)** und an der Innenseite eine in diesen hineinragende Ringnut **(9)** aufweist, in die ein dicht am Rohr **(5)** anliegender Dichtring **(8)** eingesetzt ist, und daß der Ringwulst **(7)** einen Abstand vom freien Ende des Stutzens **(2)** hat und der Stutzen **(2)** beidseits des Ringwulsts **(7)** formschlüssig mit dem Rohr **(5)** verpreßt ist, so daß der zwischen den beiden Verpreßungen liegende Rohrteil gegen axiale Verschiebung und Verdrehung in Bezug auf den Dichtring **(8)** gesichert ist.

9. Anordnung nach einem der Ansprüche 1 bis 8, **dadurch gekennzeichnet,** daß das Rohr **(5)** ein einstückig an der Armatur **(1)** oder dem Fitting gebildetes Anschlußrohrstück ist, um eine Verbindung mit einer zweiten Armatur oder einem zweiten Fitting direkt herstellen zu können.

10. Bausatz zur Herstellung der Verbindungsanordnung nach einem der Ansprüche 1 bis 9 mit einer ersten Armatur **(1)** oder einem ersten Fitting aus Metallguß mit wenigstens einem rohrförmigen, gewindefreien Anschlußstutzen **(2)** und einer zweiten Armatur ader einem zweiten Fitting mit wenigstens einem gewindefreien Rohrendstück **(5, 21)** mit **(25, 31)** oder ohne Stützhülsenbewehrung, wobei
die Innenmantelfläche des Anschlußstutzens **(2)** und die Außenmantelfläche des Rohrendstücks **(5)** zu einem lediglich spielbehafteten Zusammenstecken ausgebildet sind,
die Quetschgrenze des Stutzens höchstens gleich groß wie diejenige des Rohrendstücks **(5)** bzw. des bewehrten Rohrendstücks **(21)** ist, damit
bei eingestecktem Rohrendstück **(5)** bzw. bewehrtem Rohrendstück **(21)** mit einer auf den Stutzen **(2)** aufgesetzten Zange dieser plastisch ohne Rißbildung verformbar und
die nach der Verformung erhaltene Stutzenquerschnittskontour nicht durch die elastische Rückstellkraft des eingelegten Rohrendstücks **(5)** bzw. des bewehrten Rohrendstücks **(21)** rückformbar ist.

11. Armatur **(1)** des Bausatzes nach Anspruch 10 zur Verwendung im Bausatz nach Anspruch 10
bestehend im wesentlichen aus einer Rotgußlegierung,
vorzugsweise mit wenigstens annähernd 2% Sn, 8% Zn, 5% Pb, 2,2 bis 3,0% Ni und einem Rest Kupfer,
mit einem rohrförmigen, gewindefreien, eine Wandstärke zwischen 1 und 2 mm und keine herausgearbeiteten wesentlichen Wandstärkeänderungen aufweisenden Anschlußstutzens **(2)**, der
mittels einer Zange plastisch ohne Rißbildung mit einem dem Innendurchmesser des Anschlußstutzens **(2)** angepaßten Rohrendstück **(5, 21)** eines zweites Fittings oder einer zweiten Armatur des Bausatzes nach Anspruch 10 flüssigkeitsdicht verpreßbar ist.

12. Armatur **(1)** nach Anspruch 11, **dadurch gekennzeichnet,** daß
dessen Stutzen **(2)** an der Außenseite wenigstens einen Ringwulst **(7)** und
an der Innenseite eine in diesen hineinragende Ringnut **(9)** aufweist, in die ein Dichtring **(8)** einlegbar ist.

13. Armatur nach Anspruch 12, **dadurch gekennzeichnet,** daß
der Ringwulst **(7)** einen Abstand vom freien Ende **(12)** des Stutzens **(2)** hat, und
der Abstand so bemessen ist, daß
sowohl der die Ringwulst **(7)** überragende Endteil **(12)** als auch der auf der anderen Seite des Wulstes **(7)** liegende Teil des Stutzens **(2)** mittels der Zange mit dem Rohr **(5, 21)** verpreßbar ist, wobei
der Wulst **(7)** zur Positionierung der Zangenbacken **(15, 16)** der Zange ausgebildet ist.

14. Armatur nach Anspruch 11, **dadurch gekennzeichnet**, daß
die Innenfläche des Anschlußstutzens **(2)** außerhalb des Anpreßbereichs eine Ringstufe **(13)** hat, bis zu der das Rohrendstück **(5, 21)** einschiebbar ist, und
die Stufenhöhe vorzugsweise annähernd der Rohrwandstärke bzw. dem Außendurchmesser einer am Rohrendstück anbringbaren Stützhülse **(23, 31)** entspricht.

15. Verfahren zur Herstellung einer fluiddichten Preßverbindung nach einem der Ansprüche 1 oder 4, **dadurch gekennzeichnet**, daß
der Stutzen **(2)** auf das Rohr **(5)** aufgeschoben wird bzw.
die Stützhülse **(31)** in das Rohrende gedrückt bzw. der innere und der äußere Hülsenteil **(33, 35)** der Stützhülse auf das Rohr **(21)** gesteckt und der Stutzen **(2)** auf das mit der Stützhülse bewehrte Rohr **(21)** aufgeschoben und dann der Stutzen **(2)**
mittels einer Zange unter plastischer Verformung gegen das Rohr **(5)** bzw. das mit der Stützhülse **(25, 31)** bewehrte Rohr **(21)** gepreßt wird.

16. Verfahren nach Anspruch 15, **dadurch gekennzeichnet,** daß während des Preßvorgangs Vertiefungen in den Stutzen **(2)** entlang seines Umfangs an mehreren voneinander distanzierten Stellen gedrückt werden, die einen Formschluß zwischen dem Stutzen **(2)** und dem Rohr **(5, 21)** bzw. dem Stutzen **(2)** und dem Rohr **(21)** mit der Stützhülse **(23, 31)** erzeugen.

17. Verfahren zur Herstellung der Armatur **(1)** nach Anspruch 11, **dadurch gekennzeichnet,** daß
sie **(1)** aus einer Rotgußlegierung, vorzugsweise mit wenigstens annähernd 2% Sn, 8% Zn, 5% Pb, 2,2 bis 3,0% Ni und einem Rest Kupfer gegossen wird und
bei einer Temperatur von zweihundert bis fünfhundert Grad Celsius mindestens eine Stunde geglüht wird, damit deren gegossener Anschlußstutzen mittels einer Zange plastisch ohne Rißbildung auf ein dem Innendurchmesser dieses Anschlußstutzens **(2)** angepaßtes Rohrendstück **(5, 21)** eines zweites Fittings oder einer zweiten Armatur des Bausatzes nach Anspruch 10 flüssigkeitsdicht aufpreßbar ist.

## Claims

1. Press connection arrangement, wherein a connection piece (2) of a fitting (1) of cast metal is pressed onto a tube (5, 21) which has no substantial worked-out changes of the wall thickness thereof in the area of the press connection and which is not reinforced or is provided with a support sleeve, the yield point under pressure of the connection piece (2) is at most equal to that of the tube (5) or of the support sleeve (23, 31), as the case may be, and the modulus of elasticity of the support sleeve is greater than that of the tube (21) accommodating the support sleeve, so that the tube (5) or the support sleeve (23, 31), as the case may be, attempts to a greater extent than does the connection piece (2) to recover its shape after the pressing pressure active during the pressing-on operation is removed, in order to press the tube onto the plastically deformed connection piece, the wall thickness of the connection piece (2) being such that this piece resists the recovery of the tube (5) or of the support sleeve (23), as the case may be, which is attributable to their resilience after the pressure has been removed.

2. Arrangement according to claim 1, characterised in that the connection piece (2) and the tube (5) or the support sleeve (21, 31), as the case may be, comprise different metal materials and the yield point under pressure and the modulus of elasticity of the connection piece (2) are smaller than those of the tube (5) or of the support sleeve (23, 31), as the case may be.

3. Arrangement according to claim 1 or 2, characterised by sealing means (8) between the inner wall of the connection piece (2) and the outer wall of the tube (5, 21).

4. Arrangement according to any one of claims 1 to 3, characterised in that the support sleeve (31) has an inner sleeve portion (33) arranged in the tube (21) and an outer sleeve portion (35) abutting the outer surface of the tube (21), both of which are compressed in a positively locking manner with the tube (21), the inner sleeve portion (33) being connected to the outer sleeve portion (35) by a web (37) around the front of the tube end.

5. Arrangement according to claim 4, characterised by sealing means (45, 8) between the inner sleeve portion (33) and the tube (21) and/or between the outer sleeve portion (35) and the connection piece (2).

6. Arrangement according to any one of claims 1 to 5, characterised in that the wall of the connection piece (2) and of the tube (5, 21) are deformed plastically in such a manner that a positive lock is present between them.

7. Arrangement according to any one of claims 1 to 6, characterised in that the connection piece (2) is, at several sites which are spaced apart from one another along the circumference, pressed onto the tube (5, 21), or the tube (5, 21) is compressed with the support sleeve (23, 31), as the case may be.

8. Arrangement according to any one of claims 1 to 7, characterised in that the connection piece (2) has, on the outside, an annular bead (7) and, on the inside, an annular groove (9) which projects into the bead and in which is inserted a sealing ring (8) which abuts the tube (5) in sealing manner, and in that the annular bead (7) is arranged at a distance from the free end of the connection piece (2) and the connection piece (2) is compressed in positivelocking manner with the tube (5) on both sides of the annular bead (7) so that the tube portion lying between the two compressed portions is secured against axial displacement and rotation with respect to the sealing ring (8).

9. Arrangement according to any one of claims 1 to 8, characterised in that the tube (5) is a connecting tube piece formed integrally on the fitting (1), so that it is possible to produce a direct connection to a second fitting.

10. Construction kit for manufacturing the connection arrangement according to any one of claims 1 to 9, which has a first fitting (1) of cast metal having at least one tubular, non-threaded connection piece (2) and a second fitting having at least one non-threaded tube end piece (5, 21) with (25, 31) or without a support sleeve reinforcement, wherein
the inner surface of the connection piece (2) and the outer surface of the tube end piece (5) are constructed to be assembled with only the disadvantage of play,
the yield point under pressure of the connection piece is at most equal to that of the tube end piece (5) or of the reinforced tube end piece (21), as the case may be, so that,
when the tube end piece (5) is inserted or when the tube end piece (21) is reinforced, as the case may be, the connection piece (2) can be plastically deformed without cracking by means of pliers placed thereon and
the connection piece cross-sectional contour obtained after deformation cannot be recovered by the resilient restoring force of the inserted tube end piece (5) or of the reinforced tube end piece (21), respectively.

11. Fitting (1) of the construction kit according to claim 10 for use in the construction kit according to claim 10
consisting substantially of a gunmetal alloy,
preferably having at least approximately 2% Sn, 8% Zn, 5% Pb, from 2.2 to 3.0% Ni, the remainder being copper,
having a tubular, non-threaded connection piece (2) which has a wall thickness of between 1 and 2 mm and no substantial worked-out changes of the wall thickness thereof, and which
can be compressed plastically by means of pliers, without the formation of cracks and in fluid-tight manner, with a tube end piece (5, 21) of a second fitting of the construction kit according to claim 10, which tube end piece is adapted to the inside diameter of the connection piece (2).

12. Fitting (1) according to claim 11, characterised in that
its connection piece (2) has, on the outside, at least one annular bead (7) and,
on the inside, an annular groove (9) which projects into the annular bead and in which a sealing ring (8) can be arranged.

13. Fitting according to claim 12, characterised in that
the annular bead (7) is arranged at a distance from the free end (12) of the connection piece (2) and
the distance is such that
both the end portion (12) projecting beyond the annular bead (7) and the portion of the connection piece (2) lying on the other side of the bead (7) can be compressed with the tube (5, 21) by means of the pliers,
the bead (7) being constructed for positioning the jaws (15, 16) of the pliers.

14. Fitting according to claim 11, characterised in that
the inner face of the connection piece (2) has, outside the pressing area, an annular step (13) as far as which the tube end piece (5, 21) can be inserted, and
the step height preferably corresponds approximately to the tube wall thickness or to the outside diameter of a support sleeve (23, 31) which can be fitted to the tube end piece.

15. Method of manufacturing a fluid-tight press connection according to either claim 1 or claim 4, characterised in that
the connection piece (2) is slipped onto the tube (5) or
the support sleeve (31) is pressed into the tube end, or the inner and outer sleeve portions (33, 35) of the support sleeve are placed on the tube (21), and the connection piece (2) is slipped onto the tube (21) reinforced by the support sleeve, and then the connection piece (2)
is pressed by means of pliers, with plastic deformation, against the tube (5) or the tube (21) reinforced by the support sleeve (25, 31), as the case may be.

16. Method according to claim 15, characterised in that, during the pressing operation, depressions are impressed in the connection piece (2) at various sites which are spaced apart from one another along its circumference, which depressions produce a positive lock between the connection piece (2) and the tube (5, 21) or between the connection piece (2) and the tube (21) with the support sleeve (23, 31), as the case may be.

17. Method of manufacturing the fitting (1) according to claim 11, characterised in that
it (1) is cast from a gunmetal alloy, preferably having at least approximately 2% Sn, 8% Zn, 5% Pb, from 2.2 to 3.0% Ni, the remainder being copper, and
is annealed at a temperature of from two hundred to five hundred degrees Celsius for at least one hour so that
its cast connection piece can be pressed plastically by means of pliers, without the formation of cracks and in fluid-tight manner, onto a tube end piece (5, 21) of a second fitting of the construction kit according to claim 10, which tube end piece is adapted to the inside diameter of the connection piece (2).

## Revendications

1. Agencement de liaison serré dans lequel une tubulure de raccordement (2) d'une robinetterie (1) ou d'un raccord en métal coulé est pressée sur un tube (5, 21) ne présentant pas dans la région de la liaison par compression de modifications essentielles d'épaisseur de paroi, non muni d'une armature ou muni d'une douille d'appui, la résistance limite à la compression de la tubulure (2) étant au maximum égale à celle du tube (5) ou de la douille d'appui (23, 31) et le module d'élasticité de la douille d'appui étant supérieur à celui du tube (21) comprenant la douille d'appui, de manière que le tube (5) ou la douille d'appui (23, 31) ait tendance à reprendre sa forme davantage que la tubulure (2) après suppression de la pression de compression agissant pendant le pressage, de façon à appuyer le tube contre la tubulure déformée plastiquement, l'épaisseur de paroi de la tubulure (2) étant dimensionnée de manière qu'elle résiste à la reprise de la forme du tube (5) ou de la douille d'appui (23) provoquée par leur élasticité après suppression de la sollicitation.

2. Agencement selon la revendication 1, caractérisé en ce que la tubulure (2) et le tube (3) ou la douille d'appui (21, 31) sont constitués en des matériaux métalliques différents et la résistance limite à la compression et le module d'élasticité de la tubulure (2) sont inférieurs à ceux du tube (5) ou de la douille d'appui (23, 31).

3. Agencement selon la revendication 1 ou 2, caractérisé par un moyen d'étanchéité (8) entre la paroi interne de la tubulure (2) et la paroi externe du tube (5, 21).

4. Agencement selon l'une des revendications 1 à 3, caractérisé en ce que la douille d'appui (31) comprend une partie de douille interne (33) disposée dans le tube (21) et une partie de douille externe (35) s'appliquant sur l'enveloppe du tube (21), qui sont toutes les deux pressées pour les solidariser au tube (21) par concordance de formes, la partie de douille interne (33) étant reliée à la partie de douille externe (35) par une membrure (37) autour du côté frontal de l'extrémité du tube.

5. Agencement selon la revendication 4, caractérisé par un moyen d'étanchéité (45, 8) entre la partie de douille interne (33) et le tube (21) et/ou la partie de douille externe (35) et la tubulure (2).

6. Agencement selon l'une des revendications 1 à 5, caractérisé en ce que les parois de la tubulure (2) et du tube (5, 21) sont déformées plastiquement de manière à déterminer une liaison par concordance de formes entre elles.

7. Agencement selon l'une des revendications 1 à 6, caractérisé en ce que la tubulure (2) est pressée sur le tube (5, 21) ou le tube (5, 21) est pressé sur le douille d'appui (23, 31) en plusieurs emplacements espacés les uns des autres le long de leur périphérie.

8. Agencement selon l'une quelconque des revendications 1 à 7, caractérisé en ce que la tubulure (2) comprend sur le côté externe un bourrelet annulaire (7) et sur le côté interne une gorge annulaire (9) en saillie, gorge dans laquelle est disposée une bague d'étanchéité (8) appliquée étroitement contre le tube (5), et en ce que le bourrelet annulaire (7) est situé à distance de l'extrémité libre de la tubulure (2) et la tubulure (2) est pressée de chaque côté du bourrelet annulaire (7) pour réaliser une liaison par concordance de formes sur le tube (5), de manière que la partie du tube située entre les deux parties comprimées ne puisse effectuer ni déplacement axial ni rotation par rapport à la bague d'étanchéité (8).

9. Agencement selon l'une quelconque des revendications 1 à 8, caractérisé en ce que le tube (5) est constitué par un tronçon de tube de raccordement formé d'un seul tenant avec la robinetterie (1) ou avec le raccord, de manière à pouvoir réaliser directement une liaison avec une seconde robinetterie ou un second raccord.

10. Bloc pour réaliser l'agencement de liaison selon l'une quelconque des revendications 1 à 9, comprenant une première robinetterie (1) ou un premier raccord en métal moulé avec au moins une tubulure de raccordement (2) tubulaire non filetée et une seconde robinetterie ou un second raccord avec au moins une section d'extrémité de tube non filetée (5, 21) avec (25, 31) ou sans armature --constituée par une douille d'appui,
la surface d'enveloppe interne de la tubulure de raccordement (2) et la surface d'enveloppe externe de la section d'extrémité de tube (5) étant constituées de manière à pouvoir simplement s'emboîter l'une dans l'autre avec jeu,
la résistance limite à la compression de la tubulure étant au plus égale à celle de la section d'extrémité de tube (5) ou de la section d'extrémité de tube munie d'une armature (21), de façon que,
lorsque la section d'extrémité de tube (5) ou la section d'extrémité de tube munie d'une armature (21) est mise en place, elle est déformable plastiquement sans formation de fissures à l'aide d'une pince appliquée sur la tubulure (2), et
le contour de la section transversale de la tubulure obtenue après la déformation n'étant pas ramené à sa forme par la force de rappel élastique de la section d'extrémité de tube (5) ou de la section d'extrémité de tube (21) muni d'une armature et mise en place.

11. Robinetterie (1) du bloc selon la revendication 10 en vue de son utilisation dans le bloc de la revendication 10,
constituée essentiellement en alliage de laiton
comprenant de préférence au moins approximativement 2% de Sn, 8% de Zn, 5% de Pb, 2,2 à 3,0% de Ni et le reste en cuivre,
comprenant une tubulure de raccordement (2) de forme tubulaire, non filetée, présentant une épaisseur de paroi comprise entre 1 et 2 mm et aucune variation sensible d'épaisseur de paroi,
qui peut être pressée de façon étanche aux fluides au moyen d'une pince, plastiquement et sans formation de fissures, sur une section d'extrémité de tube (5, 21) adaptée au diamètre interne de la tubulure de raccordement (2) ou sur un second raccord ou une seconde robinetterie du bloc de la revendication 10.

12. Robinetterie (1) selon la revendication 11, caractérisée en ce que
sa tubulure (2) comprend sur son côté extérieur au moins un bourrelet annulaire (7) et
sur son côté intérieur une gorge annulaire (9) faisant saillie dans ce dernier, gorge dans laquelle peut être disposée une bague d'étanchéité (8).

13. Robinetterie selon la revendication 12, caractérisée en ce que
le bourrelet annulaire (7) est situé à distance de l'extrémité libre (12) de la tubulure (2) et
cette distance est dimensionnée de manière que
aussi bien la section d'extrémité (12) qui fait saillie au-delà du bourrelet annulaire (7) que l'autre partie de la tubulure (2) qui est située sur l'autre côté du bourrelet (7) peuvent être pressées sur le tube (5, 21) au moyen de la pince,
le bourrelet (7) étant constitué pour assurer le positionnement des mâchoires (15, 16) de la pince.

14. Robinetterie selon la revendication 11, caractérisée en ce que
la surface interne de la tubulure de raccordement (2) présente, à l'extérieur de la zone de compression, un gradin annulaire (13) jusqu'auquel la section d'extrémité de tube (5, 21) peut être enfoncée, et
la hauteur du gradin correspond de préférence approximativement à l'épaisseur de paroi du tube ou au diamètre externe d'une douille d'appui (23, 31) pouvant être disposée sur la section d'extrémité du tube.

15. Procédé pour réaliser une liaison par pression étanche aux fluides selon la revendication 1 ou 4, caractérisé en ce que
la tubulure (2) est enfoncée sur le tube (5), ou
la douille d'appui (31) est pressée à l'intérieur de l'extrémité du tube, ou la partie de douille interne et la partie de douille externe (33, 35) de la douille d'appui est enfoncée sur le tube (21) et la tubulure (2) est enfoncée sur le tube (21) protégé par la douille d'appui, èt ensuite la tubulure (2)
est comprimée au moyen d'une pince et par déformation plastique contre le tube (5) ou le tube (21) protégé par la douille d'appui (25, 31).

16. Procédé selon la revendication 15, caractérisé en ce que, pendant l'opération de compression, des dépressions sont constituées dans la tubulure (2) le long de sa périphérie en plusieurs emplacements situés à distance les uns des autres, qui produisent une liaison par concordance de formes entre la tubulure (2) et le tube (5, 21), ou entre la tubulure (2) et le tube (21) muni de la douille d'appui (23, 31).

17. Procédé pour réaliser la robinetterie (1) selon la revendication 11, caractérisé en ce que
cette robinetterie (1) est en un alliage de coulée de laiton comprenant de préférence au moins approximativement 2% de Sn, 8% de Zn, 5% de Pb, 2,2 à 3,0% de Ni et le reste en cuivre, et
recuite à une température comprise entre 200 et 50°C pendant au moins une heure, de manière que
sa tubulure de raccordement moulée puisse être pressée de façon étanche aux fluides au moyen d'une pince, plastiquement et sans formation de fissures, sur une section d'extrémité de tube (5, 21) adaptée au diamètre interne de cette tubulure de raccordement (2) et appartenant à un second raccord ou à une seconde robinetterie du bloc selon la revendication 10.
